# EUROPÄISCHE PATENTSCHRIFT

(11) **EP 2 851 704 B1**
(45) Veröffentlichungstag und Bekanntmachung des Hinweises auf die Patenterteilung: **11.12.2019**
(21) Anmeldenummer: 13185160.2
(22) Anmeldetag: 19.09.2013
(51) Int. Cl.: G01S 17/10, G01S 17/42, G01S 7/481

(54) **Vorrichtung und Verfahren zum optischen Bestimmen von Abständen zu Objekten in einem Überwachungsbereich**
Apparatus and method for optically identifying the distances between objects in a monitoring area
Dispositif et procédé de détermination optique de distances par rapport à des objets dans une zone de surveillance

(43) Veröffentlichungstag der Anmeldung: 25.03.2015
(73) Patentinhaber: Pepperl+Fuchs AG, 68307 Mannheim (DE)
(72) Erfinder: Satzky, Uwe, 22455 Hamburg (DE); Schröder, Thorsten, 12621 Berlin (DE); Hagemann, Arno, 22049 Hamburg (DE); Tabel, Ernst, 22337 Hamburg (DE); Holger, Jaap, 21502 Geesthacht (DE)
(74) Vertreter: Schiffer, Axel Martin

(56) Entgegenhaltungen:
- DE-A1-102007 004 609
- US-A- 5 546 188
- US-A1- 2011 037 849

## Beschreibung

Die vorliegende Erfindung betrifft in einem ersten Aspekt eine Vorrichtung zum optischen Bestimmen von Abständen zu Objekten in einem Überwachungsbereich nach dem Oberbegriff des Anspruchs 1.

Eine gattungsgemäße Vorrichtung ist beispielsweise in WO 2009/124601 A1 beschrieben und weist folgende Komponenten auf: Eine Sendeinheit, die eine Mehrzahl von Sendern zum Aussenden von Lichtpulsen in den Überwachungsbereich aufweist, eine Detektoreinheit, die mindestens einen Detektor zum Nachweis von aus dem Überwachungsbereich zurückgestrahlten Lichtpulsen aufweist und eine Steuer- und Auswerteeinheit zum Ansteuern der Senderanordnung und zum Auswerten von Messdaten der Detektoreinheit.

Ein gattungsgemäßes Verfahren ist ebenfalls aus WO 2009/124601 A1 bekannt und beinhaltet folgende Verfahrensschritte: Aussenden von Sendelichtpulsen in den Überwachungsbereich mit einer Mehrzahl von Sendern und Nachweisen der aus dem Überwachungsbereich zurückgestrahlten Lichtpulse.

Entfernungsmessende optische Sensoren, bei denen zum Bestimmen einer Entfernung eines Objekts von dem optischen Sensor die Laufzeit eines Lichtpulses ausgewertet wird, sind grundsätzlich bekannt. Um in diesem Zusammenhang mehr Information als nur die Entfernungsinformation für einen einzigen Punkt zu gewinnen, werden häufig mechanisch bewegte Systeme eingesetzt, beispielsweise Laserscanner. Diese Lösungen sind aber aufwendig, teuer und mechanisch anfällig.

Außerdem wird zur Lösung der allgemeinen Aufgabenstellung, von einem nachzuweisenden Objekt eine dreidimensionale Ortsinformation zu erhalten, auf Phasenmodulationstechnologien zurückgegriffen.

Hierbei wird ein zu vermessender linearer Bereich auf einer Probe mit einer Lichtquelle beleuchtet, die eine stehende Welle aussendet. Das zurückgestrahlte Licht wird mit einem speziellen Detektor nachgewiesen. Durch einen Phasenvergleich kann dann ermittelt werden, in welcher Entfernung das Sendelicht reflektiert wird. Das Grundprinzip besteht dabei jeweils darin, dass auf einem Messpixel (beispielsweise auf einem CMOS-Chip) zwei fotoempfindliche Flächen vorhanden sind, denen jeweils Ladungskondensatoren zugeordnet sind. Durch das Anlegen einer Rechteckspannung wird zwischen den beiden Flächen umgeschaltet, wobei die angelegte Rechteckspannung in Frequenz- und Phasenlage genau der Frequenz entspricht, mit der eine Leuchtdiode oder eine Laserdiode ein Zielobjekt beleuchtet. Das ausgesendete Licht trifft dann zeitversetzt und demgemäß phasenverschoben zur angelegten Rechteckspannung auf die Pixel des CMOS-Chips. Die wegen der Phasenverschiebung unterschiedliche Ladung der beiden Pixel wird als Maß für die zu messende Entfernung verwendet.

Bei diesem Verfahren handelt es sich um ein sogenanntes Phasenkorrelationsverfahren. Das Zielobjekt muss dabei durchgehend mit einer modulierten Lichtquelle beleuchtet werden, wobei üblicherweise Licht im infraroten Bereich, also mit einer Wellenlänge von etwa 860 nm verwendet wird.

Der Anteil dieses Lichts muss aus dem Gleichlicht der Umgebung herausgefiltert werden, weil die zum Einsatz kommenden Empfangselemente, beispielsweise Pindioden, APDs (Avalanche-Photodioden) oder, wie beschrieben, CMOS-Chips sowohl im Infrarotbereich als auch im sichtbaren Bereich empfindlich sind.

Dieses Herausfiltern kann grundsätzlich unterschiedlich erfolgen. Die sicherste Methode ist der Einsatz sogenannter optischer Bandpässe, die nur einen vergleichsweise kleinen Wellenlängenbereich (+/- 30 nm) durchlassen. Ein Nachteil dieser Filter sind deren hohe Herstellungskosten.

Um bei einem Phasenkorrelationsverfahren eindeutige Messergebnisse zu erzielen, darf die Modulationswellenlänge nicht kürzer sein als die zu vermessende Entfernung. Bei einer Entfernung von 10 m, entsprechend einer Periodendauer der Modulation von 66 ns, bedeutet das, dass das ausgesendete Licht mit etwa 15,2 MHz moduliert werden muss. Mit einer Reichweitensteigerung geht deshalb grundsätzlich ein Genauigkeitsverlust einher. Die Modulationswellenlänge des ausgestrahlten Lichts bestimmt also die maximale Reichweite und damit die Eindeutigkeit der Objektzuordnung sowie außerdem die maximale Entfernungsauflösung. Grundsätzlich muss bei dem hier beschriebenen Phasenkorrelationsverfahren eine ganze Linie beleuchtet werden, so dass das Signal/Rauschverhältnis relativ klein ist. Weiterhin sind hohe Sendeenergien notwendig, um einen hinreichend großen Öffnungswinkel zu erhalten. Schließlich sind die Phasenkorrelationsverfahren vergleichsweise störanfällig für Fremdlicht, was sich nachteilig auf die Verfügbarkeit auswirkt.

In US-5,546,188 ist ein optischer Sensor zur Verkehrsüberwachung beschrieben, bei dem mit Hilfe von gepulsten Laserstrahlen sowohl die Geschwindigkeit als auch das dreidimensionale Profil von Fahrzeugen vermessen werden kann.

In DE 10 2007 004 609 A1 ist eine gattungsgemäße Vorrichtung und ein gattungsgemäßes Verfahren zum optischen bestimmen von Abständen zu Objekten in einem Überwachungsbereich beschrieben. Dabei kann in einem Array von Lasern jeder Leser nacheinander aktiviert werden, sodass ein entsprechendes optisches Element, das in Bezug auf das Array von Lasern befestigt ist, jeweilige Abfragestrahlen in im Wesentlichen unterschiedlichen Richtungen erzeugt.

Als eine **Aufgabe** der vorliegenden Erfindung kann angesehen werden, eine Vorrichtung und ein Verfahren zum optischen Nachweis und zur Charakterisierung von Objekten in einem Überwachungsbereich anzugeben, welche besonders störsicher arbeiten und damit eine hohe Verfügbarkeit aufweisen.

Diese Aufgabe wird in einem ersten Gesichtspunkt mit den Merkmalen des Anspruchs 1 gelöst.

In einem zweiten Gesichtspunkt wird die Aufgabe durch das Verfahren mit den Merkmalen des Anspruchs 12 gelöst.

Bevorzugte Ausgestaltung der erfindungsgemäßen Vorrichtung und vorteilhafte Varianten des erfindungsgemäßen Verfahrens werden im Folgenden, insbesondere im Zusammenhang mit den abhängigen Ansprüchen und der beigefügten Figur, beschrieben.

Die Vorrichtung der oben angegebenen Art ist erfindungsgemäß dadurch weitergebildet, dass ein Raumwinkel, in den die Sender abstrahlen, so klein ist und die Sender in der Sendeeinheit so angeordnet sind, dass die Sendelichtpulse der verschiedenen Sender auf einem Objekt im Überwachungsbereich voneinander unterscheidbare Leuchtflecke beleuchten, dass Unterscheidungsmittel vorhanden sind, um zurückgestrahlte Lichtpulse, die auf Sendelichtpulse von verschiedenen Sendern zurückgehen, voneinander zu unterscheiden, und dass die Auswerte- und Steuereinheit dazu eingerichtet ist, aus Zeitdifferenzen zwischen Empfangszeitpunkten der zurückgestrahlten Lichtpulse und Sendezeitpunkten der zugehörigen Sendelichtpulse sowie der Lichtgeschwindigkeit in dem Überwachungsbereich Abstände von durch die Sendelichtpulse bestrahlten Objektbereichen relativ zur Detektoreinheit zu bestimmen.

Das Verfahren der oben genannten Art ist erfindungsgemäß dadurch weitergebildet, dass ein Raumwinkel, in den die Sender abstrahlen, so klein ist und die Sender so angeordnet sind, dass durch die Sendelichtpulse der verschiedenen Sender auf einem Objekt im Überwachungsbereich voneinander unterscheidbare Leuchtflecke beleuchtet werden und dass aus Zeitdifferenzen zwischen Empfangszeitpunkten der zurückgestrahlten Lichtpulse und Sendezeitpunkten der zugehörigen Sendelichtpulse sowie der Lichtgeschwindigkeit in dem Überwachungsbereich Abstände von durch die Sendelichtpulse bestrahlten Objektbereichen relativ zur Detektoreinheit zu bestimmen.

Das Verfahren der oben genannten Art ist erfindungsgemäß dadurch weitergebildet, dass ein Raumwinkel, in den die Sender abstrahlen, so klein ist und die Sender so angeordnet sind, dass durch die Sendelichtpulse der verschiedenen Sender auf einem Objekt im Überwachungsbereich voneinander unterscheidbare Leuchtflecke beleuchtet werden und dass aus Zeitdifferenzen zwischen Empfangszeitpunkten der zurückgestrahlten Lichtpulse und Sendezeitpunkten der zugehörigen Sendelichtpulse sowie der Lichtgeschwindigkeit in dem Überwachungsbereich Abstände von durch die Sendelichtpulse bestrahlten Objektbereichen relativ zur Detektoreinheit bestimmt werden.

Als ein erster Kerngedanke der vorliegenden Erfindung kann angesehen werden, statt einer Phasenauswertung eine echte Laufzeitmessung für die Lichtpulse durchzuführen. Dies hat den Vorteil, dass jede Einzelmessung mit hoher Qualität durchgeführt werden kann.

Ein weiterer Grundgedanke der Erfindung besteht darin, mit einer Vielzahl von Sendern zu arbeiten, die jeweils so ausgerichtet sind und eine solche Strahlcharakteristik aufweisen, dass durch die Sendelichtpulse der verschiedenen Sender auf einem Objekt im Überwachungsbereich voneinander unterscheidbare Leuchtflecke beleuchtet werden. Dadurch wird erreicht, dass das Objekt im Überwachungsbereich prinzipiell von der Mehrzahl der Sender abgetastet wird und eine der verwendeten Senderanzahl entsprechende Zahl von Entfernungsmessungen durchgeführt wird. Um die in der Detektoreinheit einlaufenden zurückgestrahlten Lichtpulse den von den jeweiligen Sendern ausgestrahlten Sendelichtpulsen zuordnen zu können, sind außerdem, hierin besteht ein weiterer Kerngedanke der vorliegenden Erfindung, Unterscheidungsmittel vorhanden, um die zurückgestrahlten Lichtpulse, die auf Sendelichtpulse von verschiedenen Sendern zurückgehen, voneinander zu unterscheiden.

Ein weiterer Vorteil der hier beschriebenen Erfindung besteht darin, dass die Vorrichtung im Prinzip beliebig skalierbar, also vergrößer- oder verkleinerbar ist.

Sodann sind, weil im Unterschied zu Laserscannern keine beweglichen Teile notwendig sind, sehr geringe Baugrößen möglich, was sich auch bei den Kosten positiv bemerkbar macht.

Ergänzend können als Unterscheidungsmittel bevorzugt Mittel zum zeitlich verzögerten Aussenden der Sendelichtpulse verwendet werden. Konkret kann das durch geeignete Programmierung in der Steuer- und Auswerteeinheit erzielt werden. Zweckmäßig ist dabei insbesondere, das Aussenden der Lichtpulse durch die Senderanordnung so zu steuern, dass sich die auf die jeweiligen Sendepulse zurückgehenden aus dem Überwachungsbereich zurückgestrahlten Lichtpulse beim Nachweis in der Detektoreinheit nicht zeitlich überlappen.

Erfindungsgemäß wird zum Bereitstellen der Unterscheidungsmittel eine Sendeeinheit zu verwendet, bei der die Sendelichtpulse der verschiedenen Sender wenigstens teilweise voneinander verschiedene Wellenlängen aufweisen und die Detektoreinheit entsprechend zum selektiven Nachweis der verschiedenen Wellenlängen eingerichtet ist. Beispielsweise kann die Detektoreinheit zum selektiven Nachweis von verschiedenen Wellenlängen mindestens einen Farbfilter aufweisen.

Ein weiterer besonderer Vorteil der vorliegenden Erfindung besteht darin, dass die Sender der Sendeeinheit prinzipiell beliebig angeordnet werden können, beispielsweise in einer geraden Reihe oder matrixartig. Für die einzelnen Sender werden bevorzugt Leuchtdioden oder Laser verwendet, die im Infrarotbereich oder im sichtbaren Bereich emittieren. In dieser Hinsicht kann auf bekannte Standardkomponenten zurückgegriffen werden.

Bei einer besonders bevorzugten Variante der erfindungsgemäßen Vorrichtung ist mindestens ein Sender durch das Ende einer Lichtleitfaser gebildet. Beispielsweise kann eine Sendeeinheit gebildet sein durch eine Mehrzahl von Lichtleitfasern, deren Enden die eigentlichen abstrahlenden Sender bilden. In diese Lichtleitfasern kann das Sendelicht mit prinzipiell bekannten Mitteln eingekoppelt werden. Diese Lösung hat insbesondere den Vorteil, dass grundsätzlich nur eine einzige Lichtquelle notwendig ist.

Grundsätzlich ist es ausreichend, wenn die erfindungsgemäße Vorrichtung einen einzigen Detektor aufweist. Die Messgeschwindigkeit kann aber gesteigert werden, wenn die Detektoreinheit eine Mehrzahl von Einzeldetektoren, die beispielsweise für unterschiedliche Wellenlängen empfindlich sind, aufweist.

Prinzipiell reicht es aus, wenn eine einzige Zeitmesseinrichtung vorhanden ist, mit welcher die Zeitdifferenzen zwischen den Empfangszeitpunkten der zurückgestrahlten Lichtpulse und den Sendezeitpunkten der zugehörigen Sendelichtpulse gemessen werden. Die Notwendigkeit, zwei verschiedene Messeinheiten aufeinander einzustellen, besteht deshalb nicht.

Bevorzugt weisen die Sender zueinander parallele optische Achsen auf. Das bedeutet, dass auf einer Fläche im Überwachungsbereich, die senkrecht zur Strahlrichtung der Sender positioniert ist, die von den Sendelichtpulsen erzeugten Lichtflecke ein Muster erzeugen, welches genau der Anordnung der Sender in der Sendeeinheit entspricht. Die durch ein Raster der Lichtflecke auf einem Objekt gegebene Ortsauflösung oder räumliche Auflösung hängt dann prinzipiell nicht von der Entfernung dieses Objekts von der erfindungsgemäßen Vorrichtung ab.

Für Anwendungen, bei denen die nachzuweisenden Objekte vergleichsweise weit entfernt sind, nämlich soweit, dass die Strahldivergenz der einzelnen Sender dazu führt, dass die durch diese Sender generierten Leuchtflecken auf dem Objekt einander überlappen, kann es zweckmäßig sein, dass die Sender optische Achsen aufweisen, die von der Sendeeinheit ausgesehen divergent sind, um die Maximalentfernung, in welcher die auf einem Objekt generierten Leuchtflecke noch unterscheidbar sind, zu steigern. Bei dieser Ausführungsvariante nimmt abweichend von dem Ausführungsbeispiel mit parallelen Sendestrahlen die räumliche Auflösung der Vorrichtung mit dem Abstand des Objekts von der optischen Vorrichtung ab.

Bei der Variante, bei der die Sendepulse der unterschiedlichen Sender voneinander durch ihre Aussendezeitpunkte unterschieden werden, werden demgemäß die Sender sequenziell angesteuert. Es steht dabei im Belieben des Bedieners, in welcher Reihenfolge die Sender dabei betätigt werden.

Prinzipiell ist es auch nicht notwendig, für eine bestimmte Messung alle Sender zu betätigen, sondern es können, beispielsweise wenn die Sendeeinheit eine große Matrix von Sendern ist, nur eine bestimmte Untergruppe dieser Sender verwendet werden.

Aus den gewonnenen Abständen kann ein Oberflächenprofil des Objekts bestimmt werden. Grundsätzlich ist dabei auch möglich, dieses Oberflächenprofil zeitabhängig anzugeben, so dass als Meßergebnis eine Information zur Verfügung steht, wie sich ein bestimmtes Objekt dreidimensional im Raum bewegt.

Bei einer besonders bevorzugten Variante des erfindungsgemäßen Verfahrens werden die Abstände zum Erkennen von Objekten mit vorbestimmten Werten verglichen und, abhängig von diesen Vergleichen, wird ein Signal "Objekt X erkannt" oder ein Signal "kein Objekt erkannt" ausgegeben. Bei dieser Weiterbildung können demgemäß gezielt bestimmte Objekte im Überwachungsbereich nachgewiesen und gegebenenfalls auch in ihrer Bewegung verfolgt werden.

Der mit der vorliegenden Erfindung verfolgte Lösungsansatz geht von der sogenannten Pulse Ranging Technology (PRT) aus. Bei dieser Technologie werden die Entfernungen oder Abstände bestimmt durch das Aussenden sehr kurzer Pulse (etwa 4 ns) mit hoher Energie (100 mW bis 100 W) sowie das Nachweisen der jeweils zurückgestrahlten Pulse. Die gesamte Einheit besteht deshalb aus der Anordnung verschiedener Sendequellen, die von einer Empfangseinheit ausgewertet werden. Die Empfangseinheit misst die Zeit zwischen dem Aussenden eines Lichtpulses und dem Empfang des reflektierten Lichts. Diese Zeit ist ein Maß für die Entfernung oder den Abstand. Das bedeutet, dass viele Messungen in kurzer Zeit getätigt werden können.

Die Empfangseinheit ist dabei so ausgelegt, dass die Leuchtflecken jedes Senders auf dem nachzuweisenden Objekt von der Empfangseinheit gesehen und demgemäß nachgewiesen werden kann. Die Vermessung kann insbesondere sequentiell erfolgen, das heißt dass die Sender nacheinander in einer prinzipiell beliebigen Reihenfolge angesteuert werden können. Je nach Aufgabe kann deshalb ein beliebiger Sender oder eine beliebige Sendequelle angesteuert werden. Dadurch wird ermöglicht, je nach Aufgabenstellung, zeitoptimierte Messungen durchzuführen und insbesondere die generierten Datenmengen so klein wie möglich zu halten, ohne dabei die Qualität der Einzelmessung zu beeinflussen.

Durch Auswahl einzelner Sender kann die generierte Datenmenge reduziert werden. Die Sender können eine Optik aufweisen, beispielsweise bei Laserdioden, oder auch ohne Optik arbeiten, beispielsweise Leuchtdioden. Ebenfalls kann, falls notwendig, bei der Detektoreinheit eine Optik vorhanden sein.

Wenn Sender mit geeigneter Leistung verwendet werden, können auf einem Leuchtfleck hohe Energiedichten und damit insgesamt hohe Reichwerten erzielt werden. Die Verwendung von sichtbarem Licht für die Sender kann als Hilfestellung für das Ausrichten der erfindungsgemäßen Vorrichtung von Vorteil sein.

Grundsätzlich sind mit der erfindungsgemäßen Vorrichtung sehr hohe Messfrequenzen bei geringen Reaktionszeiten möglich. Die Reaktionszeit der erfindungsgemäßen Vorrichtung kann dabei noch reduziert werden, wenn nur diejenigen Sender verwendet werden, die tatsächlich notwendig sind. Ein weiterer Vorteil der Verwendung hochintensiver Sender besteht auch darin, dass weitgehend unabhängig von der Farbe der nachzuweisenden Objekte eine große Reichweite der erfindungsgemäßen Vorrichtung erreicht werden kann.

Insgesamt wird durch die erfindungsgemäße Vorrichtung wegen der nicht vorhandenen mechanisch beweglichen Teile eine Meßgerät mit sehr hoher Störsicherheit und damit großer Verfügbarkeit bereitgestellt, das außerdem äußerst variabel für verschiedenste Anwendungen konfiguriert werden kann.

Weitere Einzelheiten und Vorteile der erfindungsgemäßen Vorrichtung und des erfindungsgemäßen Verfahrens werden im Folgenden mit Bezug auf die beigefügte Figur erläutert.

Hierin zeigt:

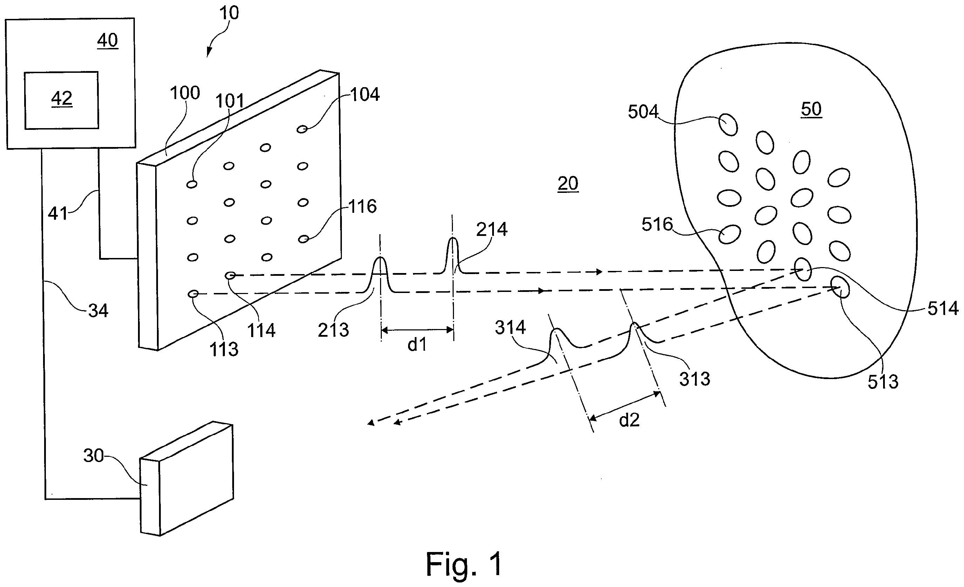

- Fig.1: eine schematische Ansicht einer erfindungsgemäßen Vorrichtung.

Ein Ausführungsbeispiel einer erfindungsgemäßen Vorrichtung 10 zum optischen Bestimmen von Abständen zu Objekten in einem Überwachungsbereich ist schematisch in Fig. 1 dargestellt. Als wesentliche Komponenten weist diese Vorrichtung 10 eine Sendeeinheit 100, eine Detektoreinheit 30 und eine Steuer- und Auswerteeinheit 40 auf. Außerdem ist in Fig. 1 schematisch ein nachzuweisendes Objekt 50 in einem Überwachungsbereich 20 der erfindungsgemäßen Vorrichtung 10 gezeigt.

Im gezeigten Beispiel weist die Sendeeinheit 100 insgesamt 16 Sender 101,..,116 auf, die in einer rechteckigen Matrix mit vier Zeilen und vier Spalten angeordnet sind. Erfindungsgemäß sind die Sender entlang einer gekrümmten Linie angeordnet. Prinzipiell kann eine viel größere Anzahl von Sendern vorhanden sein.

Im Folgenden werden die Funktionsweise der erfindungsgemäßen Vorrichtung 10 sowie das erfindungsgemäße Verfahren erläutert. Die erfindungsgemäße Vorrichtung misst Abstände zu dem nachzuweisenden Objekt 50 aufgrund einer Vielzahl von Laufzeitmessungen der von den Sendern 101,..,116 ausgesandten Lichtpulse.

Beispielsweise emittiert der Sender 114 zu einem bestimmten Zeitpunkt einen Sendelichtpuls 214, der auf das nachzuweisende Objekt 50 trifft und dort einen Leuchtfleck 514 erzeugt. Von diesem Leuchtfleck 514 wird der Sendelichtpuls in Abhängigkeit von der Oberflächenbeschaffenheit des Objekts 50 an der Stelle des Leuchtflecks 514 in prinzipiell viele verschiedene Richtungen zurückgestrahlt. Insbesondere wird der Lichtpuls 314 auch in Richtung der Detektoreinheit 30 zurückgestrahlt und dort zu einem bestimmten Zeitpunkt detektiert.

Mit den Bezugszeichen 504 und 516 sind die zu den Sendern 104 und 116 gehörenden Leuchtflecke auf dem Objekt 50 gekennzeichnet.

Die Detektoreinheit 30 soll im gezeigten Ausführungsbeispiel genau einen Detektor aufweisen. Das ergibt einerseits den Vorteil, dass die erfindungsgemäße Vorrichtung 10 vergleichsweise unaufwändig aufgebaut ist. Andererseits muss aber, um einen zuverlässigen Messbetrieb zu ermöglichen, die Randbedingung erfüllt sein, dass die von dem Objekt 50 zurückgestrahlten Lichtpulse sich in der Detektoreinheit 30 nicht zeitlich überlappen.

Das wird anhand der von den Sendern 113 und 114 ausgestrahlten Sendelichtpulse 213, 214 erläutert. Wie in Fig. 1 dargestellt, emittiert der Sender 114 zu einem ersten Zeitpunkt einen Sendelichtpuls 214 und anschließend daran emittiert der Sender 113 zu einem zweiten Zeitpunkt einen Sendelichtpuls 213. Hieraus ergibt sich, wie in Fig. 1 gezeigt, ein räumlicher Versatz d1 dieser beiden Sendelichtpulse. Die Sendelichtpulse 214 und 213 treffen dann auf das nachzuweisende Objekt 50 und beleuchten dort voneinander getrennte, also nicht überlappende und somit unterscheidbare Leuchtflecke 514 und 513. Von diesen Leuchtflecken 514 und 513 werden die Lichtpulse 314 und 313 in Richtung der Detektoreinheit 30 zurückgestrahlt. Die zurückgestrahlten Lichtpulse 314 und 313 weisen einen räumlichen Versatz d2 auf, der sich aus dem räumlichen Versatz d1 sowie eventuell vorhandenen Unterschieden der Laufstrecke Sender 113 - Leuchtfleck 513 - Detektoreinheit 30 im Vergleich zur Laufstrecke Sender 114 - Leuchtfleck 514 - Detektoreinheit 30 ergibt. Die Detektoreinheit 30 misst dann zu verschiedenen Zeitpunkten die einlaufenden zurückgestrahlten Lichtpulse 314 und 313 und führt diese Zeiten der Steuer- und Auswerteeinheit zu.

Die Steuer- und Auswerteeinheit 40 wirkt mit der Sendeeinheit 100 und der Detektoreinheit 30 zusammen. Dies kann auf prinzipiell beliebige Weise erfolgen. Im gezeigten Beispiel ist die Sendeeinheit 100 mit einem Verbindungskabel 41 mit der Steuer- und Auswerteeinheit verbunden und die Detektoreinheit 30 ist mit einer Verbindungsleitung 34 mit der Steuer- und Auswerteeinheit 40 verbunden.

Die Steuer- und Auswerteeinheit 40 steuert die Sendeeinheit 100 und die darin enthaltenen Sender 101,..,116 an. Insbesondere werden in der Steuer- und Auswerteeinheit 40 die Zeitpunkte, zu denen die Sender 113 und 114 die Lichtpulse 213 und 214 abgestrahlt haben, festgehalten. Zusammen mit den von der Detektoreinheit 30 gemessenen Empfangszeiten der zurückgestrahlten Lichtpulse 313 und 314 können dann in der Steuer- und Auswerteeinheit 40 die Zeitdifferenzen ermittelt werden und durch Multiplikation mit der Ausbreitungsgeschwindigkeit des Lichts in dem Überwachungsbereich können dann die tatsächlichen Laufstrecken des Lichts und damit die Entfernung der Leuchtflecken 513 und 514 von der optischen Vorrichtung 10 bestimmt werden.

Zum Ermitteln der Zeitdifferenz steht in der Steuer- und Auswerteeinheit 40 genau eine Zeitmesseinrichtung 42 zur Verfügung. An diese Zeitmesseinrichtung ist wegen der außerordentlichen Größe der Lichtgeschwindigkeit eine hohe Genauigkeitsanforderung gestellt. Beispielsweise entspricht eine Abstandsdifferenz von 1 cm einem Laufzeitunterschied von nur 66 ps.

Wesentlich für die vorliegende Erfindung ist, dass, im Unterschied zum Stand der Technik das nachzuweisende Objekt 50 im Überwachungsbereich 20 mit einer Vielzahl von Sendern 101,..,116 beleuchtet wird, wobei diese Sender 101,..,116 nur in einem sehr geringen Raumwinkelbereich abstrahlen, das heißt auf dem nachzuweisenden Objekt 50 nur sehr kleine Leuchtflecken beleuchten und außerdem in der Sendeeinheit 100 so positioniert und ausgerichtet sind, dass die auf dem Objekt 50 erzeugten Leuchtflecke voneinander unterscheidbar sind. Wesentlich ist außerdem, dass Mittel vorhanden sind, um die von den einzelnen Sendern 101,..,116 abgestrahlten Sendelichtpulse voneinander zu unterscheiden. Im gezeigten Beispiel sind die Unterscheidungsmittel in der Steuer- und Auswerteeinheit dadurch gebildet, dass die Steuer- und Auswerteeinheit 40 die Sender 101,..,116 oder eine geeignete Auswahl dieser Sender so ansteuert, dass die zu den jeweiligen Sendelichtpulsen gehörenden zurückgestrahlten Lichtpulse im Detektor nicht zeitlich überlappen.

## Patentansprüche

1. Vorrichtung zum optischen Bestimmen von Abständen zu Objekten (50) in einem Überwachungsbereich (20) mit einer Sendeeinheit (100), die eine Mehrzahl von Sendern (101,..,116) zum Aussenden von Sendelichtpulsen (213, 214) in den Überwachungsbereich (20) aufweist, mit einer Detektoreinheit (30), die mindestens einen Detektor zum Nachweis von aus dem Überwachungsbereich (20) zurückgestrahlten Lichtpulsen (313, 314) aufweist, und
mit einer Steuer- und Auswerteeinheit (40) zum Ansteuern der Sendeeinheit (100) und zum Auswerten von Messdaten der Detektoreinheit (30),
wobei ein Raumwinkel, in den die Sender (101,..,116) abstrahlen, so klein ist und die Sender (101,..,116) in der Sendeeinheit (100) so angeordnet sind, dass die Sendelichtpulse (213, 214) der verschiedenen Sender (101,..,116) auf einem Objekt (50) im Überwachungsbereich (20) voneinander unterscheidbare Leuchtflecke (513, 514) beleuchten,
wobei Unterscheidungsmittel vorhanden sind, um zurückgestrahlte Lichtpulse (313, 314), die auf Sendelichtpulse (213, 214) von verschiedenen Sendern (113, 114) zurückgehen, voneinander zu unterscheiden, und wobei die Auswerte- und Steuereinheit (40) dazu eingerichtet ist, aus Zeitdifferenzen zwischen Empfangszeitpunkten der zurückgestrahlten Lichtpulse (313, 314) und Sendezeitpunkten der zugehörigen Sendelichtpulse (213, 214) sowie der Lichtgeschwindigkeit in dem Überwachungsbereich (20) Abstände von durch die Sendelichtpulse (213, 214) bestrahlten Objektbereichen (513, 514) relativ zur Detektoreinheit (30) zu bestimmen,
**dadurch gekennzeichnet,**
**dass** die Sender (101,..,116) entlang einer gekrümmten Linie angeordnet sind.

2. Vorrichtung nach Anspruch 1,
**dadurch gekennzeichnet,**
**dass** als Unterscheidungsmittel Mittel zum zeitlich verzögerten Aussenden der Sendelichtpulse (213, 214) vorhanden sind, wobei das verzögerte Aussenden insbesondere so erfolgt, dass sich die zu den jeweiligen Sendepulsen (213, 214) gehörenden zurückgestrahlten Lichtpulse (313, 314) beim Nachweis in der Detektoreinheit (30) nicht zeitlich überlappen.

3. Vorrichtung nach Anspruch 1 oder 2,
**dadurch gekennzeichnet,**
**dass** zum Bereitstellen der Unterscheidungsmittel die Sendelichtpulse (213, 214) der unterschiedlicher Sender (101,..,116) wenigstens teilweise voneinander verschiedene Wellenlängen aufweisen und dass die Detektoreinheit (30) zum selektiven Nachweis der verschiedenen Wellenlängen eingerichtet ist.

4. Vorrichtung nach einem der Ansprüche 1 bis 3,
**dadurch gekennzeichnet,**
**dass** die Detektoreinheit (30) zum selektiven Nachweis von verschiedenen Wellenlängen mindestens einen Farbfilter aufweist.

5. Vorrichtung nach einem der Ansprüche 1 bis 4,
**dadurch gekennzeichnet,**
**dass** die Sender (101,..,116) in einer, insbesondere geraden, Reihe oder matrixartig angeordnet sind.

6. Vorrichtung nach einem der Ansprüche 1 bis 5,
**dadurch gekennzeichnet,**
**dass** die Detektoreinheit (30) eine Mehrzahl von Einzeldetektoren aufweist.

7. Vorrichtung nach einem der Ansprüche 1 bis 6,
**dadurch gekennzeichnet,**
**dass** die Sender (101,..,116) Leuchtdioden oder Laser sind und insbesondere Infrarotstrahlung oder sichtbares Licht emittieren.

8. Vorrichtung nach einem der Ansprüche 1 bis 7,
**dadurch gekennzeichnet,**
**dass** mindestens ein Sender (101,..116) durch das Ende einer Lichtleitfaser gebildet ist.

9. Vorrichtung nach einem der Ansprüche 1 bis 8,
**dadurch gekennzeichnet,**
**dass** in der Steuer- und Auswerteeinheit (40) eine einzige Zeitmesseinrichtung (42) vorhanden ist, mit welcher die Zeitdifferenzen zwischen den Empfangszeitpunkten der zurückgestrahlten Lichtpulse (313, 314) und den Sendezeitpunkten der zugehörigen Sendelichtpulse (213, 214) gemessen werden.

10. Vorrichtung nach einem der Ansprüche 1 bis 9,
**dadurch gekennzeichnet,**
**dass** die Sender (101,..,116) zueinander parallele optische Achsen aufweisen.

11. Vorrichtung nach einem der Ansprüche 1 bis 10,
**dadurch gekennzeichnet,**
**dass** die Sender (101,..,116) optische Achsen aufweisen, die von der Sendeeinheit (100) aus gesehen divergent sind, um die Maximalentfernung, in welcher die auf einem Objekt (50) generierten Leuchtflecke (513, 514) noch unterscheidbar sind, zu steigern.

12. Verfahren zum optischen Bestimmen von Abständen zu Objekten (50) in einem Überwachungsbereich (20),
bei dem mit einer Mehrzahl von Sendern (101,..,116) Sendelichtpulse (213, 214) in den Überwachungsbereich (20) ausgesendet werden und
bei dem aus dem Überwachungsbereich (20) zurückgestrahlte Lichtpulse (313, 314) nachgewiesen werden,
wobei ein Raumwinkel, in den die Sender (101,..,116) abstrahlen, so klein ist und die Sender (101,..,116) so angeordnet sind, dass durch die Sendelichtpulse (213, 214) der verschiedenen Sender (101,..,116) auf einem Objekt (50) im Überwachungsbereich (20) voneinander unterscheidbare Leuchtflecke (513, 514) beleuchtet werden und
wobei aus Zeitdifferenzen zwischen Empfangszeitpunkten der zurückgestrahlten Lichtpulse (313, 314) und Sendezeitpunkten der zugehörigen Sendelichtpulse (213, 214) sowie der Lichtgeschwindigkeit in dem Überwachungsbereich (20) Abstände von durch die Sendelichtpulse (213, 214) bestrahlten Objektbereichen (513, 514) relativ zur Detektoreinheit (30) bestimmt werden, **dadurch gekennzeichnet,**
**dass** die Sender (101,..,116) entlang einer gekrümmten Linie angeordnet sind

13. Verfahren nach Anspruch 12,
**dadurch gekennzeichnet,**
**dass** die Sender (101,..,116) sequenziell angesteuert werden.

14. Verfahren nach Anspruch 12 oder 13,
**dadurch gekennzeichnet,**
**dass** nur ein Teil der Sender (101,..,116) für eine bestimmte Messung verwendet wird.

15. Verfahren nach einem der Ansprüche 12 bis 14,
**dadurch gekennzeichnet,**
**dass** aus den Abständen ein Oberflächenprofil des Objekts (50) bestimmt wird.

16. Verfahren nach einem der Ansprüche 12 bis 15,
**dadurch gekennzeichnet,**
**dass** die Abstände zum Erkennen von Objekten (50) mit vorbestimmten Werten verglichen werden und, abhängig von diesen Vergleichen, ein Signal "Objekt X erkannt" oder ein Signal "kein Objekt erkannt" ausgegeben wird.

## Claims

1. Device for the optical determination of distances to objects (50) in a surveillance area (20)
having a transmission unit (100) comprising a plurality of transmitters (101,.., 116) for transmitting of transmission light pulses (213, 214) into the surveillance area (20),
having a detector unit (30) comprising at least one detector for detecting light pulses (313, 314) remitted from the surveillance area (20) and
having a control and evaluation unit (40) for controlling the transmission unit (100) and for evaluating of measurement data from the detector unit (30), wherein a space angle into which the transmitters (101,.., 116) radiate is so small and the transmitters (101,..,116) are arranged in the transmission unit (100) such that the transmission light pulses (213, 214) of the different transmitters (101,..,116) illuminate, on an object (50) in the surveillance area (20), illumination spots (513, 514) distinguishable from one another, wherein distinguishing means are present for distinguishing light pulses (313, 314) going back to transmission light pulses (213, 214) from different transmitters (113, 114), and
wherein the control and evaluation unit (40) is designed for determining distances of object regions (513, 515) illuminated by the transmission light pulses (213, 214) in relation to the detector unit (30) from time differences between the detection times of the remitted light pulses (330, 314) and the transmission times of the corresponding transmission light pulses (213, 214) as well as the speed of light in the surveillance area (20), **characterized in,**
**that** the transmitters (101,..,116) are arranged along a curved line.

2. Device according to claim 1,
**characterized in**
**that** as the distinguishing means means for the temporally delayed transmission of the transmission light pulses (213, 214) are present, wherein the delayed transmission is brought about in particular such that the remitted light pulses (313, 314) corresponding to the respective transmission pulses (213, 214) do not temporally overlap at the detection in the detector unit (30).

3. Device according to claim 1 or 2,
**characterized in**
**that**, for providing the distinguishing means, the transmission light pulses (213, 214) of the different transmitters (101,..,116) at least partially comprise wavelengths different from one another and that the detector unit (30) is arranged for the selective detection of different wavelengths.

4. Device according to one of the claims 1 to 3,
**characterized in**
**that** the detector unit (30) for the selective detection of different wavelengths comprises at least one color filter.

5. Device according to one of the claims 1 to 4,
**characterized in**
**that** the transmitters (101,..,116) are arranged in a, in particular straight, row or as a matrix.

6. Device according to one of the claims 1 to 5,
**characterized in**
**that** the detector unit (30) comprises a plurality of single detectors.

7. Device according to one of the claims 1 to 6,
**characterized in**
**that** the transmitters (101,..,116) are light emitting diodes or lasers and emit in particular infrared radiation or visible light.

8. Device according to one of the claims 1 to 7,
**characterized in**
**that** the at least one transmitter (101,.., 116) is formed by the end of a light conducting fiber.

9. Device according to one of the claims 1 to 8,
**characterized in**
**that**, in the control and evaluation unit (40), one single time measurement device is present with which the time differences between the detection times of the remitted light pulses (313, 314 and the transmission times of the corresponding transmission light pulses (213, 214) are measured.

10. Device according to one of the claims 1 to 9,
**characterized in**
**that** the transmitters (101,..,116) have optical axes parallel to each other.

11. Device according to one of the claims 1 to 10,
**characterized in**
**that** the transmitters (101,..,116) have optical axes which, viewed from the transmission unit (100), are divergent for increasing the maximum distance in which the illumination spots (513, 514) generated on an object (50) are still distinguishable.

12. Methods for the optical determination of distances to objects (50) in a surveillance area (20),
wherein, with a plurality of transmitters (101,..,116), transmission light pulses (213, 214) are being transmitted into the surveillance area (20), wherein light pulses (313, 314) remitted from the surveillance area (20) are being detected,
wherein a space angle into which the transmitters (101,.., 116) radiate is so small and the transmitters (101,..,116) are arranged such that by the transmission light pulses (213, 214) of the different transmitters (101,..,116) illumination spots (513, 514) are illuminated on an object (50) in the surveillance area (20) which are distinguishable from one another, wherein distances of object regions (513, 515) illuminated by the transmission light pulses (213, 214) in relation to the detector unit (30) are being determined from time differences between detection times of the remitted light pulses (330, 314) and the transmission times of the corresponding transmission light pulses (213, 214) as well as the speed of light in the surveillance area (20) **characterized in,**
**that** the transmitters (101,..,116) are arranged along a curved line.

13. Method according to claim 12,
**characterized in**
**that** the transmitters (101,..,116) are driven sequentially.

14. Method according to claim 12 or 13,
**characterized in**
**that** only a part of the transmitters (101,..116) are being used for an individual measurement.

15. Method according to one of the claims 12 to 14,
**characterized in**
**that** from the distances a surface profile of the object (50) is being determined.

16. Method according to one of the claims 12 to 15,
**characterized in,**
**that** the distances are compared with predetermined values for the recognizing of objects (50) and that, in dependence of these comparisons, a signal "Object X Recognized" or a signal "No Object Recognized" is being outputted.

## Revendications

1. Dispositif de détermination optique de distances par rapport à des objets (50) dans une zone de surveillance (20),
comprenant une unité d'émission (100), qui présente une pluralité d'émetteurs (101, ..., 116) destinés à émettre des impulsions lumineuses émises (213, 214) dans la zone de surveillance (20),
une unité de détection (30), qui présente au moins un détecteur pour la détection d'impulsions lumineuses réfléchies (313, 314) provenant de la zone de surveillance (20), et
une unité de commande et d'évaluation (40) destinée à commander l'unité d'émission (100) et à évaluer des données de mesure de l'unité de détection (30),
dans lequel un angle solide dans lequel les émetteurs (101, ..., 116) émettent est si petit et les émetteurs (101, ..., 116) sont agencés dans l'unité d'émission (100) de telle sorte que les impulsions lumineuses émises (213, 214) des différents émetteurs (101, ..., 116) projettent des points lumineux (513, 514) pouvant être différentiés les uns des autres sur un objet (50) dans la zone de surveillance (20),
dans lequel des moyens de différentiation sont présents, afin de différentier les unes des autres les impulsions lumineuses réfléchies (313, 314), qui sont attribuées aux impulsions lumineuses émises (213, 214) de différents émetteurs (113, 114), et
dans lequel l'unité de commande et d'évaluation (40) est conçue pour déterminer, à partir des différences de temps entre les instants de réception des impulsions lumineuses réfléchies (313, 314) et les instants d'émission des impulsions lumineuses émises (213, 214) correspondantes ainsi que de la vitesse de la lumière dans la zone de surveillance (20), les distances des zones d'objet (513, 514) irradiées par les impulsions lumineuses émises (213, 214) par rapport à l'unité de détection (30),
**caractérisé**
**en ce que** les émetteurs (101, ..., 116) sont agencés le long d'une ligne courbée.

2. Dispositif selon la revendication 1,
**caractérisé**
**en ce que** des moyens destinés à émettre les impulsions lumineuses émises (213, 214) de manière retardée dans le temps sont présents en tant que moyens de différentiation, dans lequel l'émission retardée s'effectue en particulier de sorte que les impulsions lumineuses réfléchies (313, 314) faisant partie des impulsions lumineuses émises (213, 214) respectives ne se chevauchent pas dans le temps lorsqu'elles sont détectées dans l'unité de détection (30).

3. Dispositif selon la revendication 1 ou 2,
**caractérisé**
**en ce que** pour la fourniture des moyens de différentiation, les impulsions lumineuses émises (213, 214) des différents émetteurs (101, ..., 116) présentent des longueurs d'onde au moins en partie différentes les unes des autres et **en ce que** l'unité de détection (30) est conçue pour la détection sélective des différentes longueurs d'onde.

4. Dispositif selon l'une quelconque des revendications 1 à 3,
**caractérisé**
**en ce que** l'unité de détection (30) destinée à la détection sélective de différentes longueurs d'onde présente au moins un filtre chromatique.

5. Dispositif selon l'une quelconque des revendications 1 à 4,
**caractérisé**
**en ce que** les émetteurs (101, ..., 116) sont agencés sur une rangée, en particulier droite, ou en matrice.

6. Dispositif selon l'une quelconque des revendications 1 à 5,
**caractérisé**
**en ce que** l'unité de détection (30) présente une pluralité de détecteurs individuels.

7. Dispositif selon l'une quelconque des revendications 1 à 6,
**caractérisé**
**en ce que** les émetteurs (101, ..., 116) sont des diodes électroluminescentes ou des lasers et émettent en particulier un rayonnement infrarouge ou une lumière visible.

8. Dispositif selon l'une quelconque des revendications 1 à 7,
**caractérisé**
**en ce qu'**au moins un émetteur (101, ..., 116) est formé par l'extrémité d'une fibre optique.

9. Dispositif selon l'une quelconque des revendications 1 à 8,
**caractérisé**
**en ce qu'**un seul dispositif de mesure de temps (42) est présent dans l'unité de commande et d'évaluation (40), au moyen duquel les différences de temps entre les instants de réception des impulsions lumineuses réfléchies (313, 314) et les instants d'émission des impulsions lumineuses émises (213, 214) correspondantes sont mesurées.

10. Dispositif selon l'une quelconque des revendications 1 à 9,
**caractérisé**
**en ce que** les émetteurs (101, ..., 116) présentent des axes optiques parallèles les uns aux autres.

11. Dispositif selon l'une quelconque des revendications 1 à 10,
**caractérisé**
**en ce que** les émetteurs (101, ..., 116) présentent des axes optiques, qui sont divergents lorsqu'ils sont observés à partir de l'unité d'émission (100), afin d'augmenter l'éloignement maximal dans lequel il est encore possible de différentier les points lumineux (513, 514) générés sur un objet (50).

12. Procédé de détermination optique de distances par rapport à des objets (50) dans une zone de surveillance (20),
selon lequel des impulsions lumineuses émises (213, 214) sont émises dans la zone de surveillance (20) au moyen d'une pluralité d'émetteurs (101, ..., 116) et
selon lequel les impulsions lumineuses réfléchies (313, 314) provenant de la zone de surveillance (20) sont détectées,
dans lequel un angle solide dans lequel les émetteurs (101, ..., 116) émettent est si petit et les émetteurs (101, ..., 116) sont agencés de telle sorte que les impulsions lumineuses émises (213, 214) des différents émetteurs (101, ..., 116) permettent de projeter des points lumineux (513, 514) pouvant être différentiés les uns des autres sur un objet (50) dans la zone de surveillance (20),
dans lequel, à partir des différences de temps entre les instants de réception des impulsions lumineuses réfléchies (313, 314) et les instants d'émission des impulsions lumineuses émises (213, 214) correspondantes ainsi que de la vitesse de la lumière dans la zone de surveillance (20), les distances des zones d'objet (513, 514) irradiées par les impulsions lumineuses émises (213, 214) par rapport à l'unité de détection (30) sont définies,
**caractérisé**
**en ce que** les émetteurs (101, ..., 116) sont agencés le long d'une ligne courbée.

13. Procédé selon la revendication 12,
**caractérisé**
**en ce que** les émetteurs (101, ..., 116) sont commandés de manière séquentielle.

14. Procédé selon la revendication 12 ou 13,
**caractérisé**
**en ce qu'**une seule partie des émetteurs (101, ..., 116) est utilisée pour une mesure définie.

15. Procédé selon l'une quelconque des revendications 12 à 14,
**caractérisé**
**en ce qu'**un profil de surface de l'objet (50) est défini à partir des distances.

16. Procédé selon l'une quelconque des revendications 12 à 15,
**caractérisé**
**en ce que** les distances, pour l'identification d'objets (50), sont comparées à des valeurs prédéfinies et, en fonction de ces comparaisons, un signal « objet X identifié » ou un signal « aucun objet identifié » est émis.
